# EUROPEAN PATENT SPECIFICATION

(11) **EP 2 203 282 B1**
(45) Date of publication and mention of the grant of the patent: **23.11.2011**
(21) Application number: 08772493.6
(22) Date of filing: 10.07.2008
(51) Int. Cl.: B26B 21/04, B23P 15/28

(54) **METHOD OF MANUFACTURING RAZOR BLADES**
VERFAHREN ZUR HERSTELLUNG VON RASIERKLINGEN
PROCÉDÉ DE FABRICATION DE LAMES DE RASOIR

(30) Priority: 29.10.2007 US 983261 P
(43) Date of publication of application: 07.07.2010
(73) Proprietor: Eveready Battery Company, Inc., St Louis, Missouri 63141 (US)
(72) Inventor: PINCHUK, Walter, T., Naugatuck Connecticut 06770 (US); ROCKWELL, Douglas, E., Prospect Connecticut 06712 (US)
(74) Representative: von Kreisler Selting Werner
(86) International application number: PCT/US2008/069580
(87) International publication number: WO 2009/058437

(56) References cited:
- US-A- 5 609 075
- US-A1- 2006 000 526
- US-A1- 2007 089 567
- US-A1- 2007 163 390
- US-B1- 6 629 475

## Description

### BACKGROUND OF THE INVENTION

### TECHNICAL FIELD

This invention relates generally to manufacturing processes for razor blades, and more specifically to methods of imparting one or more weakened areas to razor blades.

### BACKGROUND

Many modern safety razors include a disposable razor cartridge adapted to be selectively connected to a reusable handle by connecting structure therebetween. The cartridge includes a housing having at least one razor blade with a sharpened cutting edge disposed therein. Other modem safety razors include a razor cartridge permanently connected to the handle that can be disposed of as a single unit.

Razor blades are typically made from a continuous strip of stock material that is hardened and sharpened while the strip travels along a processing line. The strip is then divided in blade length sections used in manufacture of individual cartridges.

In some applications, blades are supported on respective bent supports that are mounted in the cartridge housing. To enable the supported blades to move up and down within the housing during shaving and /or to provide efficient rinsing of shaving debris from between adjacent supported blades it is desirous that the blades have a small dimension from the cutting edge to the back edge.

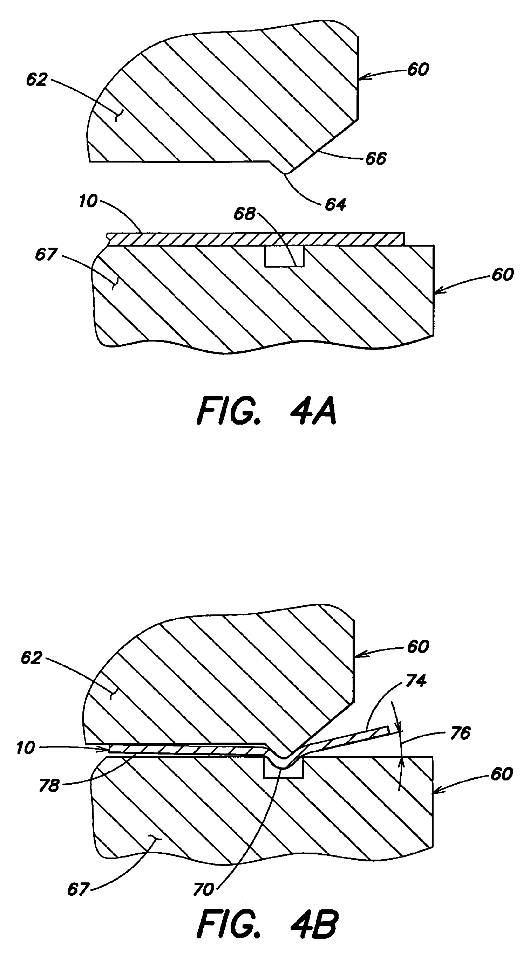

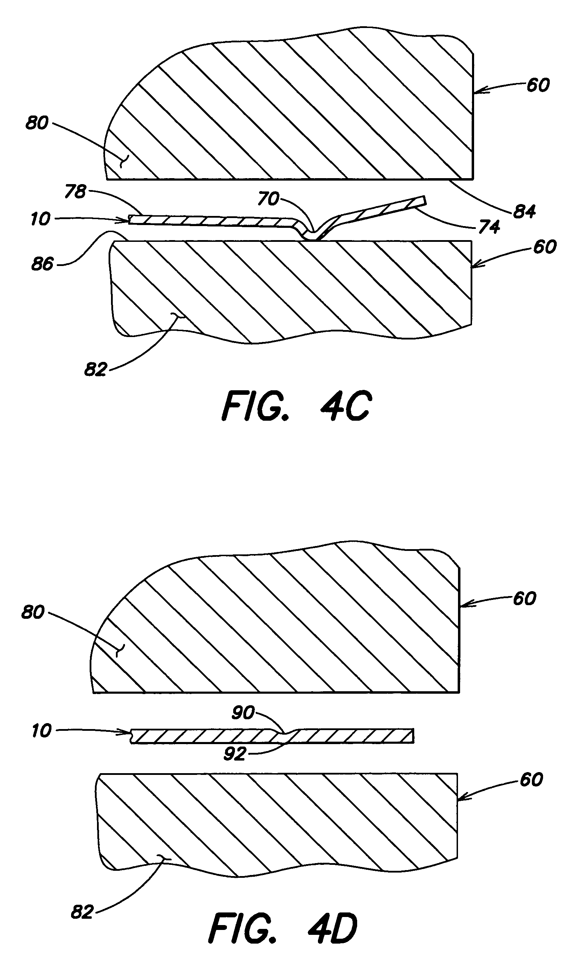

In U.S. Patent number 6,629,475 to Neamtu et al., a razor blade having a removable portion is provided to facilitate efficient handling, processing and attachment of the razor blade to its support. The removable portion and razor blade are connected at a weakened portion provided to allow the removable portion to be easily removed after the razor blade has been attached to its support. The '475 patent discloses a method of using rolling apparatus to provide the weakened portion. The rolling apparatus creates an offset between the razor blade portion and the removable portion as depicted e.g. in Fig. 4 therein.

In U.S. Patent application publication 2007/0163390, another rolling apparatus is disclosed that reduces the strip thickness of the razor blade and partially or fully flattens an aforementioned offset.

In U.S. Patent application publication 2006/0000526, apparatus is disclosed to provide a weakened portion for a razor blade using thermal energy, preferably by a laser, to provide an elongated groove in one side of the strip.

### SUMMARY

The present invention has for its objective to eliminate, or at least substantially alleviate the limitations of the prior art manufacturing processes for razor blades. This objective is achieved by the features of claim 1. The invention is directed particularly to a method of manufacturing razor blades having a weakened portion. The method comprises the steps of:
a) providing an elongated flat strip of stainless steel. The strip has a generally rectangular cross section comprising an upper surface; a lower surface and first and second opposed edges each extending along the length of the elongated strip;
b) passing the strip through a progressive perforation tool to cause an elongated portion of the strip adjacent the first edge to be bent to an acute angle relative to a body portion of the strip about a local irregularity portion; and subsequently flattening the bent portion;
c) hardening the strip;
d) sharpening the first edge to provide an elongated cutting edge; and
e) separating the strip into individual razor blades.

The weakened portion is created in the vicinity of the local irregularity. The bending and the flattening operations cause intergranular cleavage at the irregularity and the hardening process causes grain boundary oxidation in the vicinity of the cleaved (exposed) grain boundaries to create a fracture initiation site.

The razor blade has a weakened portion. The weakened portion comprises fracture initiation sites as previously described. The razor blade has a cutting edge, an opposed second edge. The weakened portion is between the cutting edge and the opposed second edge. A blade portion is between the cutting edge portion and the weakened portion and a removable portion is between the weakened portion and the opposed second edge. The razor blade is attached to a bent support and the removable portion is removed by bending about the weakened portion. One or more razor blades on their respective supports are mounted in a housing to provide a razor cartridge.

Embodiments of the invention have the following advantages. Use of a process to provide a weakened portion permits the use of softer and /or thinner blade materials that otherwise could not be easily separated by bending alone. Use of the process(es) defined herein provides manufacturing advantages.

The above features and advantages of the present invention will be more fully understood with reference to the following detailed description when taken in conjunction with the accompanying drawings.

### BRIEF DESCRIPTION OF THE DRAWINGS

Fig. 1 is a sectioned isometric view of strip material for a razor blade.
Fig. 2 is a plan view of an embodiment of part-processed strip material for a razor blade.
Fig. 3 is a plan view of another embodiment of part-processed strip material for a razor blade.
Fig. 3A is a sectional view along lines 3A-3A of Fig. 3.
Figs. 4A-4D are partial sectional views of strip material for a razor blade in stations of a progressive perforation tool.
Fig. 5 is an enlarged sectional view of a part of Fig. 3A showing a weakened portion of the strip material.

### DETAILED DESCRIPTION

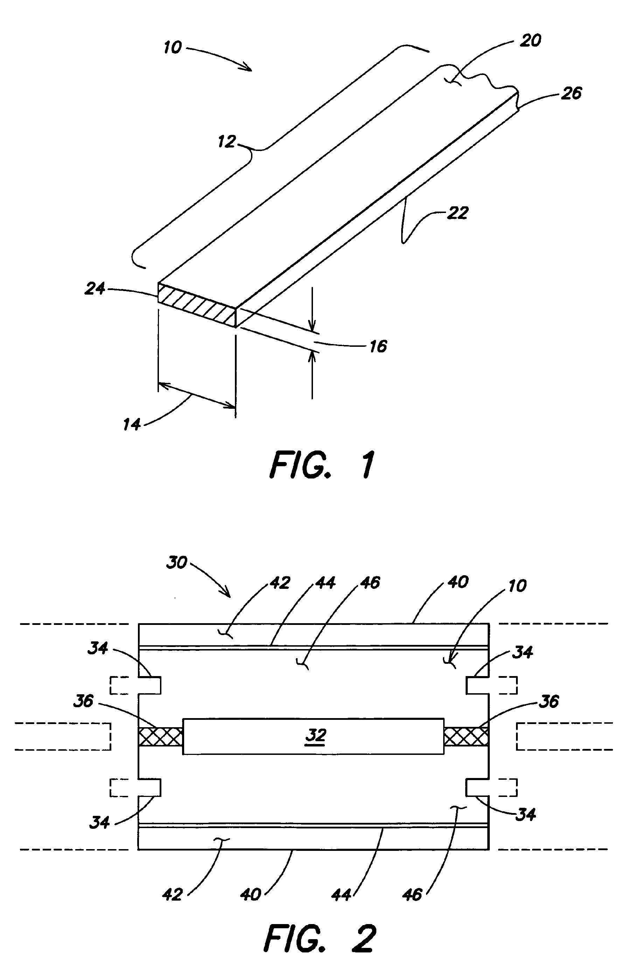

Referring to Fig. 1, stainless steel strip material 10 that is subsequently converted into razor blades is provided in elongated form 12. The strip preferably has a generally rectangular cross section having a width 14 and a thickness 16. The strip has upper and lower surfaces 20, 22 respectively and opposed edges 24, 26. The thickness 16 of the strip is preferably about 0,05mm to 0,2mm thick, more preferably 0,075-0,1mum and most preferably about 0,076mm thick. The width of the strip 14 is sufficient to suit conversion processes that can be so-called single edge or double edge processes (as will be described later) and can be between about 2.5mm to about 20mm or more wide to suit the specific application.

The hardness of the stainless steel strip is less than about 550HV and preferably about 280-460HV and the strip has a composition preferably 0.65-0.72% C; 12.7-13.9% Cr; 0.45-0.75% Mn; 0.15-0.5% Si; 0-0.5% Ni; 0-0.02% S; 0-0.025% P; balance substantially Fe. The present invention is not limited to strip of the aforementioned hardness and composition and other stainless steel materials including those disclosed for example in U.S. Patents number 5,275,672 and 5,433,801 both to Althaus et al.; U.S. Patent application publication 2007/0,137,050 to Xu et al. and European Patent application EP 1,739,199 A1 to Millward may be employed.

Referring additionally to Fig. 2, a plan view of a part-converted razor blade of a double edge process 30 is shown. The strip material 10 is perforated in continuous strip form to provide an elongated center slot 32 used to support or locate the blade strip during subsequent processes such as edge forming and edge coating. The strip material can also be perforated to provide location holes 34 that can be used to index the strip or to locate an individual razor blade relative to its respective support during attachment thereto. The strip has a splitting portion 36 adjacent to and extending longitudinally from the center slot where the razor blade can be split to convert the "double edge" razor blade to two blades of "single edge" form. The razor blade in double edge form has cutting edges 40, razor blade portions 42, weakened portions 44 and removable portions 46. Adjacent part converted razor blades in the elongated continuous strip are shown in dotted line.

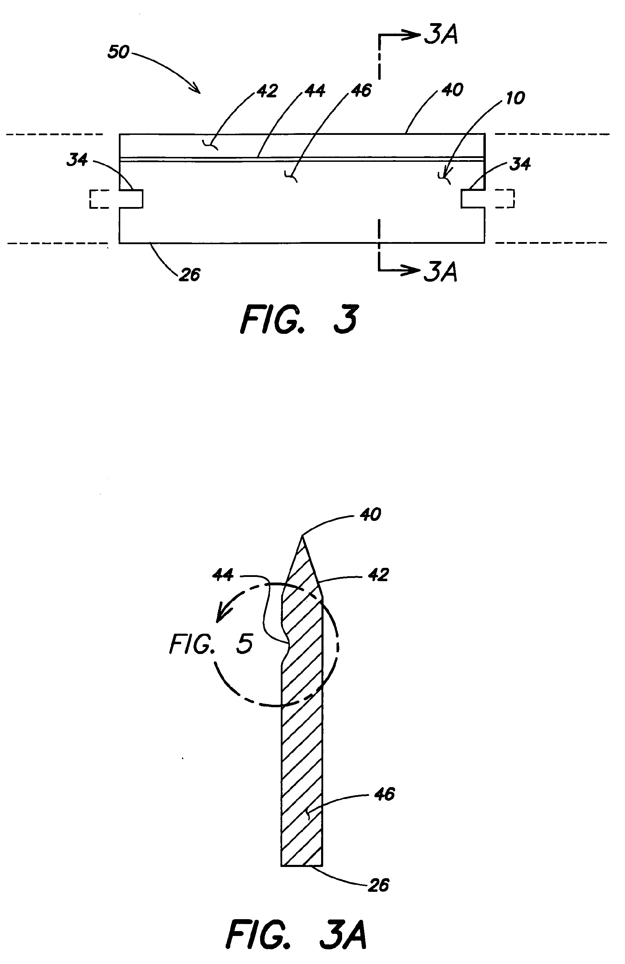

Referring additionally to Fig. 3, a plan view of a part-converted razor blade of a single edge process 50 is shown. The razor blade is substantially similar to the razor blade of the double edge process described above except the center slot is omitted and the splitting process is unnecessary. The single edge razor blade can be formed from strip of a narrower width than a double edge blade. The razor blade can have perforated location holes 34. The razor blade has a cutting edge 40, a razor blade portion 42, a weakened portion 44 and a removable portion 46.

The process to provide a weakened portion 44 will now be described in more detail. This will be described in relation to a single edge process however the process steps can equally be applied to a double edge process and the present invention is not limited in this regard. Referring now to Figs 4A-4D, partial sectional views of the strip in stations of a progressive perforation tool are shown. By providing these stations in the progressive tool in addition to conventional perforation stations the process of providing a weakened portion to the razor blade is accomplished without additional process steps such as rolling or thermal energy grooving as described in the background section of the present application. Furthermore, after subsequent conversion process(es) the weakened portion has a beneficial grain structure as will be described later in the present application. This beneficial grain structure facilitates removal of the removable portion. At the station depicted in Fig. 4A the strip 10 is depicted introduced into an open progressive perforation tool 60. This station of the tool includes a punch 62 and a die 67. The punch has an elongated protrusion 64, preferably U shaped, more preferably V shaped. The protrusion is up to about 50 microns high and preferably 33-43 microns high. A preferred V shaped protrusion has an included angle about 90 degrees and a tip radius less than about 15 microns, preferably less than 10 microns and most preferably 5-7 microns. The punch includes an elongated relief face 66 to accommodate a bent portion of the strip as described below. The opposed die has an elongated shallow groove 68, opposite the protrusion 64, so that an elongated portion of the strip material is locally unsupported. Referring now to Fig. 4B, the station of Fig. 4A is depicted shortly after the tool 60 has fully closed and impacted the strip 10 and the tool is depicted slightly open. The V shaped protrusion 64, in conjunction with the opposed grooved die 67 causes a local irregularity portion 70 to be formed in the locally unsupported portion of the strip and further causes a portion of the strip 74 to bend at an acute angle 76 relative to the body 78 of the strip. The elongated protrusion and groove each have a length sufficient to provide an irregularity along substantially the length of a part-converted razor blade. Referring now to Fig. 4C, a station subsequent to the station of Figs. 4A and 4B is shown in its open state. At this station the tool 60 includes a punch 80 with a preferably flat surface 84 and a die 82 with a preferably flat surface 86. Referring now to Fig. 4D, the station of Fig. 4C is depicted in its open state after the tool 60 has fully closed and impacted the strip. The station of Figs. 4C and 4D is provided to flatten the strip so that the bent portion 74 is aligned with the body portion 78. An elongated groove 90, residual from the irregularity, remains on the upper surface 20 of the strip. A small protrusion 92, residual from the irregularity, may be present on the lower surface 22 of the strip, however it is important that this protrusion is sufficiently small, if present, so that it does not interfere with the passage of the strip through guides in subsequent process(es). In order to ensure the strip is preferably completely flattened, if necessary a second flattening station can be provided in the progressive tool that can be identical to the flattening station previously described.

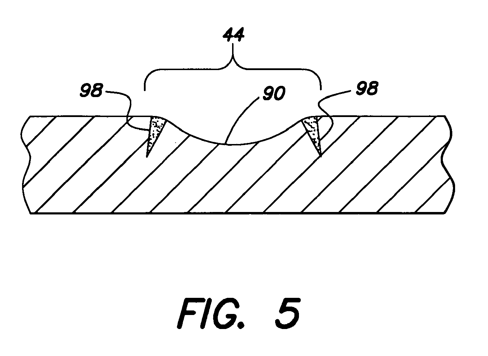

Referring now to Fig. 5, an enlarged sectional view of the strip in the vicinity of groove 90 is shown. It is important the bending process described above caused the strip material to go beyond its yield point in one or both areas 98. This results in intergranular cleavage in these areas. In a subsequent manufacturing process the strip is hardened in a process well known in the art to harden the strip preferably to about 750-850HV. In this hardening process, extensive oxidation of the exposed grain boundaries in areas 98 occurs which provides fracture initiation site(s) between adjacent cleaved and oxidized grain boundaries that provide the aforementioned weakened portion. In more further well known manufacturing process(es) a cutting edge 40 is provided; the strip is separated into individual razor blade lengths and suitable coatings can be applied to the cutting edge. The razor blade is attached to a bent support by a suitable means such as laser spot welding as disclosed in U.S. Patent number 4,379,219 to Behrens et al. The removable portion is bent relative to the razor blade portion causing a fracture to occur at the weakened portion detaching the removable portion. One or more such razor blades on respective supports are mounted in a housing to provide a razor cartridge as disclosed in the aforementioned '475 Patent.

Use of a process to provide a weakened portion permits the use of softer and /or thinner blade materials that otherwise could not be easily separated by bending alone. Use of the process(es) defined herein provides manufacturing advantages.

Although the invention has been described and illustrated with reference to specific illustrative embodiments thereof, it is not intended that the invention be limited to those illustrative embodiments. Those skilled in the art will recognize that variations and modifications can be made without departing from the true scope of the invention as defined by the claims that follow.

## Claims

1. A method of manufacturing razor blades, each having a weakened portion, comprising the steps of:
providing an elongated flat strip (10) of stainless steel having a generally rectangular cross section comprising an upper surface (20); a lower surface (22) and first and second opposed edges (24, 26) each extending along the length of the elongated strip (10);
passing the strip through a progressive perforation tool (60) to:
1) cause an elongated portion of the strip (10) adjacent the first edge to be bent to an acute angle relative to a body portion of the strip about a local irregularity portion (70); and
2) flatten the strip (10) to substantially align the portion thus bent with the body portion;
whereby one or both of the bending and the flattening operations causes intergranular cleavage in at least one portion of the irregularity portion (70);
hardening the strip;
whereby the hardening process causes grain boundary oxidation in the vicinity of the intergranular cleavage;
providing an elongated cutting edge on the first edge; and
separating the strip (10) into individual razor blades;
wherein each razor blade has a cutting edge, an opposed second edge and a weakened portion between the cutting edge and the opposed second edge; a blade portion between the cutting edge portion and the weakened portion; and a removable portion between the weakened portion and the opposed second edge;
wherein the weakened portion comprises a fracture initiation site between adjacent cleaved and oxidized grain boundaries.

2. The method of claim 1, wherein the provided elongated flat strip (10) of stainless steel has a hardness less than about 550HV.

3. The method of claim 2, wherein the provided elongated flat strip (10) of stainless steel has a hardness between 280HV and 460HV.

4. The method of claim 1, wherein the progressive perforation tool (60) includes a punch (62) having an elongated protrusion (64) that impacts the strip to cause an elongated portion of the strip (10) adjacent the first edge to be bent to an acute angle relative to a body portion of the strip about a local irregularity portion (70).

5. The method of claim 4, wherein the elongated protrusion (64) is V shaped.

6. The method of claim 4, wherein the progressive perforation tool (60) includes a die (67) having an elongated groove disposed opposite the elongated protrusion

## Patentansprüche

1. Verfahren zur Herstellung von Rasierklingen, die jeweils einen Schwächungsbereich aufweisen, mit den folgenden Schritten:
Vorsehen eines langgestreckten flachen Streifens (10) aus Edelstahl mit im Wesentlichen rechteckigem Querschnitt, mit einer Oberseite (20), einer Unterseite (22) und einem ersten sowie einem zweiten Kanal (24, 26), die einander gegenüberliegen und sich jeweils über die Länge des langgestreckten Streifens (10) erstrecken;
Bewegen des Streifens durch ein progressives Perforierwerkzeug (60), um:
1) das Biegen eines langgestreckten Bereichs des Streifens (10) nahe des ersten Randes in einem spitzen Winkel in Bezug auf einen Körperbereich des Streifens um einen lokalen Unebenheitsbereich (70) herum zu bewirken;
2) den Streifen (10) abzuflachen, um den solchermaßen gebogenen Bereich mit dem Körperbereich auszurichten;
wobei der Biege- und/oder der Abflachvorgang interkristalline Sprödigkeit in zumindest einem Bereich des Unebenheitsbereichs (70) bewirkt;
Härten des Streifens;
wobei der Härtungsvorgang Korngrenzenoxidation in der Nähe der interkristallinen Sprödigkeit bewirkt;
Bilden einer langgestreckten Schneidkante an dem ersten Rand; und
Zerteilen des Streifens (10) in einzelne Rasierklingen;
wobei jede Rasierklinge eine Schneidkante, einen gegenüberliegenden zweiten Rand und einen Schwächungsbereich zwischen der Schneidkante und dem gegenüberliegenden Rand, einen Klingenbereich zwischen dem Schneidkantenbereich und dem Schwächungsbereich, und einen entfernbaren Bereich zwischen dem Schwächungsbereich und dem gegenüberliegenden zweiten Rand aufweist;
wobei der Schwächungsbereich eine Bruchinitiierungsstelle zwischen benachbarten spröden und oxidierten Korngrenzen aufweist.

2. Verfahren nach Anspruch 1, bei dem der vorgesehene langgestreckte flache Streifen (10) aus Edelstahl eine Härte von weniger als ungefähr 550 HV aufweist.

3. Verfahren nach Anspruch 2, bei dem der vorgesehene langgestreckte flache Streifen (10) aus Edelstahl eine Härte zwischen 280 HV und 460 HV aufweist.

4. Verfahren nach Anspruch 1, bei dem das progressive Perforierungswerkzeug (60) eine Stanze (62) mit einem langgestreckten Vorsprung (64) aufweist, welcher auf den Streifen schlägt, um einen langgestreckten Bereich des Streifens (10) nahe dem ersten Rand in einem spitzen Winkel in Bezug auf einen Körperbereich des Streifens um einen lokalen Unebenheitsbereich (70) zu biegen.

5. Verfahren nach Anspruch 4, bei dem der langgestreckte Vorsprung (64) V-förmig ist.

6. Verfahren nach Anspruch 4, bei dem das progressive Perforierungswerkzeug (60) ein Gesenk (67) mit einer langgestreckten Nut aufweist, die dem langgestreckten Vorsprung gegenüberliegend angeordnet ist.

## Revendications

1. Procédé de fabrication de lames de rasoir, chaque lame comprenant une partie affaiblie, ledit procédé comprenant les étapes suivantes:
prévoir une bande métallique allongée plate (10) d'acier inoxydable de section transversale rectangulaire avec une face supérieurs (20), une face inférieure (22) et une première et une deuxième arête (24, 26), qui s'opposent, chaque arête s'étendant le long de la longueur de la bande allongée (10);
passer ladite bande à travers un outil de perforation progressive (60) afin de
1) causer le pliage d'une partie allongée de ladite bande (10) voisine à la première arête sous un angle aigu par rapport à une partie de corps de la bande autour un point d'irrégularité local (70); et
2) aplatir ladite bande (10) pour sensiblement aligner ladite partie ainsi pliée avec ladite partie de corps;
le pliage et/ou l'aplatissage provoquent des fragilités intercristallines dans au moins une partie de la partie d'irrégularité (70);
durcir la bande;
le processus de durcissement causant l'oxydation aux bordures des grains à proximité des fragilités intercristallines;
former une arête de coupure allongée sur ladite première arête; et
séparer ladite bande (10) en lames de rasoir individuelles;
chaque lame de rasoir comprenant une arête de coupure, une deuxième arête opposée et une partie affaiblie entre ladite arête de coupure et ladite deuxième arête opposée, une partie de lame entre la partie d'arête de coupure et la partie affaiblie, et une partie amovible entre ladite partie affaiblie et ladite deuxième arête opposée;
ladite partie affaiblie comprenant un point d'amorce de fracture entre les bordures de grains fragiles et oxydées adjacentes.

2. Procédé selon la revendication 1, dans lequel ladite bande allongée plate (10) en acier inoxydable a une dureté inférieure à environ 550 HV.

3. Procédé selon la revendication 2, dans lequel ladite bande allongée plate (10) en acier inoxydable a une dureté se situant entre 280 HV et 460 HV.

4. Procédé selon la revendication 1, dans lequel ledit outil de perforation progressive (60) comprend un poinçon (62) avec une protubérance allongée (64) agissant sur ladite bande pour causer le pliage d'une partie allongée de ladite bande (10) voisine à la première arête sous un angle aigu par rapport à une partie de corps de la bande autour un point d'irrégularité local (70).

5. Procédé selon la revendication 4, dans lequel les protubérances allongées (64) sont en forme de V.

6. Procédé selon l'une des revendications 1-4, dans lequel ledit outil de perforation progressive (60) comprend une matrice (67) avec une rainure allongée disposée en regard de ladite protubérance allongée.
